# EUROPÄISCHE PATENTSCHRIFT

(11) **EP 3 174 912 B1**
(45) Veröffentlichungstag und Bekanntmachung des Hinweises auf die Patenterteilung: **13.10.2021**
(21) Anmeldenummer: 15742024.1
(22) Anmeldetag: 24.07.2015
(51) Int. Cl.: C08G 18/72, C08G 18/08, C08G 18/12, C08G 18/28, C09D 175/04, C08K 3/00, C08G 18/32

(54) **VERFAHREN ZUR HERSTELLUNG UND VERWENDUNG WÄSSRIGER POLYURETHANDISPERSIONEN SOWIE DEREN VERWENDUNG IN BESCHICHTUNGSMITTELN**
METHOD FOR PRODUCING AND USING AQUEOUS POLYURETHANE DISPERSIONS AND USE OF SAME IN COATING AGENTS
PROCÉDÉ DE PRODUCTION ET D'UTILISATION DE DISPERSIONS AQUEUSES DE POLYURÉTHANE AINSI QUE LEUR UTILISATION DANS DES PRODUITS DE REVÊTEMENT

(30) Priorität: 01.08.2014 EP 14179532
(43) Veröffentlichungstag der Anmeldung: 07.06.2017
(73) Patentinhaber: BASF SE, 67056 Ludwigshafen am Rhein (DE)
(72) Erfinder: JAHNS, Ekkehard, 69469 Weinheim (DE); MANGEL, Timo, 76470 Ötigheim (DE); ROESCH, Christine, 55127 Mainz (DE); ROMANATO, Paola, 5070 Frick (CH); PAKUSCH, Joachim, 67346 Speyer (DE)
(74) Vertreter: BASF IP Association
(86) Internationale Anmeldenummer: PCT/EP2015/067051
(87) Internationale Veröffentlichungsnummer: WO 2016/016139

(56) Entgegenhaltungen:
- EP-A1- 1 088 014
- EP-A2- 1 283 230
- DE-A1- 10 161 156
- DE-A1- 10 315 175
- None

## Beschreibung

Gegenstand der vorliegenden Erfindung ist die Verwendung einer wässrigen Polyurethandispersion, dadurch gekennzeichnet, dass das Polyurethan einen Gehalt von Polyalkylenoxid von mindestens 10 g/kg Polyurethan und einen Gehalt eines sulfonierten Rohstoffs von mindestens 25 mmol pro kg Polyurethan aufweist, als Bindemittel in gefüllten Beschichtungsmitteln, für flexible Dachbeschichtungen.

Wässrige Polyurethandispersionen werden als lösungsmittelarme oder lösungsmittelfreie Beschichtungsmittel für die Holzlackierung, als Lederlacke und als Druckfarbenbindemittel eingesetzt. Bei diesen Anwendungen handelt es sich meistens um Klarlacke, oder um pigmentierte Beschichtungen. Der Vorteil dieser Beschichtungen auf Basis von wässrigen Polyurethandispersionen ist die Möglichkeit der Kontrolle der Mikrophasenmorphologie durch Wahl der relativen Anteile von Hart- und Weichsegmenten entlang der Polymerketten im Polyurethan. Insbesondere die mechanischen Eigenschaften sind hervorzuheben: Hohe Abriebbeständigkeit, sehr gute Härte bzw. Zähigkeit, gute elastische Eigenschaften, insbesondere eine sehr gute Tieftemperaturelastizität.

Polyurethandispersionen werden heute meist nicht in gefüllten Lacken eingesetzt, sondern in z.B. Leder- oder Holzbeschichtungen. Dabei werden meist Klarlacke oder nur pigmentierte Beschichtungen verwendet, ohne oder nur mit sehr wenig Anteil an Füllstoffen. Beim Versuch, diese Bindemittel in höher gefüllten, wasserbasierten Beschichtungen oder Farben einzusetzen, treten deutliche Instabilitäten der flüssigen Beschichtungen auf.

Der Anteil der Füllstoffe / Pigmente kann durch die Pigmentvolumenkonzentration (PVK), beschrieben werden. Die Pigment-Volumen-Konzentration gibt das Volumenverhältnis zwischen Pigmenten / Füllstoffen und dem Bindemittel im ausgehärteten Lackfilm wieder. Zur Berechnung der Pigmentvolumenkonzentration werden zunächst die Volumina der einzelnen Pigmente, Füllstoffe und Bindemittel aus deren Mengen (Massen) und Dichten berechnet (A. Goldschmidt, H.-J. Streitberger; BASF Handbuch Lackiertechnik; 2002; Vincentz Verlag), anschließend werden die erhaltenen Volumina der in der Formulierung enthaltenen Pigmente und Füllstoffe durch die Volumina aller festen Rohstoffe geteilt.

Zur Vereinfachung werden die ebenfalls in der Rezeptur enthaltenen Additive in der Berechnung üblicherweise nicht berücksichtigt. Lösemittel und Wasser sind in der getrockneten Beschichtung ohnehin nicht mehr enthalten und werden bei der Berechnung der PVK nicht berücksichtigt.

Die PVK wird üblicherweise in % ausgedrückt und liegt zwischen 0 % (Klarlack ohne Pigmente oder Füllstoffe) und 100 % (nur theoretisch möglich, da ohne Bindemittel).

Erfindungsgemäße Beschichtungsmittel haben eine PVK im Bereich von 10 bis 40. Für flexible Dachbeschichtungen werden Beschichtungen mit einer PVK von 10 bis 40 eingesetzt.

Die üblichen Polyurethandispersionen des Stands der Technik sind meistens nicht "füllstoffverträglich". Man muss also Modifikationen an den bekannten wässrigen Polyurethandispersionen durchführen, um sie besser füllstoffverträglich zu machen, eine Grundvorrausetzung für mittelbis hochgefüllte, typische Farb- und Beschichtungsanwendungen.

US 5, 629, 402 beschreibt Beschichtungen mit Polyurethandispersionen, die extrem permeabel für Wasserdampf sind, aber gleichzeitig nur eine geringe Tendenz zur Quellbarkeit in Wasser zeigen. Die Polyurethandispersionen enthalten ionische Gruppen und Polyethylen-glykole als Rohstoffe in der PU-Hauptkette und ein Vernetzungsagens. Als Verwendung sind für Wasserdampf permeable Beschichtungen für flexible Substrate beschrieben, wie Textilien, Leder, Papier und ähnliche. Die Verwendung der dort beschriebenen Polyurethandispersionen als Rohstoffe in Beschichtungen führt jedoch zu Systemen mit nur begrenzter Stabilität gegenüber Füllstoffen.

Die Verwendung von wässerigen Dispersionen, die Polyurethane enthalten, zur Beschichtung von Substraten wie Textil oder Leder ist seit langem bekannt (EP-A 595149).

Die DE 101 61156 beschreibt wässrige Dispersionen, enthaltend ein Polyurethan, aufgebaut aus
a) Diisocyanaten,
b) Diolen, von denen
b1) 10 bis 100 Mol-%, bezogen auf die Gesamtmenge der Diole (b), ein Molekulargewicht von 500 bis 5000 aufweisen,
   und
b2) 0 bis 90 Mol-%, bezogen auf die Gesamtmenge der Diole (b), ein Molekulargewicht von 60 bis 500 g/mol aufweisen,
c) von den Monomeren (a) und (b) verschiedene Monomere mit wenigstens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen, wodurch die Wasserdispergierbarkeit der Polyurethane bewirkt wird,
d) gegebenenfalls weiteren von den Monomeren (a) bis (c) verschiedenen mehrwertigen Verbindungen mit reaktiven Gruppen, bei denen es sich um alkalische Hydroxylgruppen, primäre oder sekundäre Aminogruppen oder Isocyanatgruppen handelt und
e) gegebenenfalls von den Monomeren (a) bis (d) verschiedenen einwertigen Verbindungen mit einer reaktiven Gruppe, bei denen es sich um eine alkoholische Hydroxylgruppe, eine primäre oder sekundäre Aminogruppe oder eine Isocyanatgruppe handelt, erhältlich durch Umsetzung der Monomere a), b), c) sowie gegebenenfalls d) und e) in Anwesenheit eines Cäsiumsalzes.

Die DE 101 61156 beschreibt weiterhin ein Verfahren zur Beschichtung, Verklebung und Imprägnierung von Gegenständen aus unterschiedlichen Materialien mit diesen Dispersionen, die mit diesen Dispersionen beschichteten, verklebten und imprägnierten Gegenstände, sowie die Verwendung der erfindungsgemäßen Dispersionen als hydrolysebeständige Beschichtungsmaterialien.

Die DE 101 61156 beschreibt keine Verwendung der PU-Dispersionen als Bindemittel in gefüllten Beschichtungsmitteln, insbesondere nicht als Bindemittel für flexible Dachbeschichtungen. Es bestand also die Aufgabe, Polyurethandispersionen zu entwickeln, die deutlich füllstoffverträglicher sind, als die im Stand der Technik bekannten Polyurethandispersionen, die besonders gute Eigenschaften bezüglich der Zähigkeit und Elastizität, auch bei Temperaturen unter dem Gefrierpunkt aufweisen. Diese PU-Dispersionen sollten insbesondere bei Verwendung als Bindemittel für gefüllte elastische Farben und Beschichtungen für horizontale Dachflächen Vorteile gegenüber den herkömmlichen Acrylatdispersionen ausweisen.

Die Aufgabe wurde überraschenderweise gelöst durch eine wässrige Polyurethandispersion, mit einen Gehalt von Polyalkylenoxid von mindestens 10 g/kg Polyurethan und einem Gehalt eines sulfonierten Rohstoffs von mindestens 25 mmol pro kg Polyurethan aufweist. Überraschend wurde gefunden, dass Polyurethandispersionen, enthaltend langkettige Alkanol-gestartete Polyethylenoxide und Natriumsalze der 2-Aminoethyl-2-aminoethan-sulfon-säure, in besonderer Weise füllstoffverträglich sind.

Zur Herstellung der erfindungsgemäßen, füllstoffverträglichen Polyurethandispersion kann es notwendig sein, dass diese PU-Dispersion mit mehr funktionellen Gruppen zum Zwecke einer guten Füllstoffverträglichkeit ausgestattet ist, als für eine PU-Dispersion in üblicher Verwendung als Textil- oder Lederbeschichtungsmittel alleine notwendig oder noch sinnvoll ist. Diese dann größere Menge an hydrophilen Gruppen in der PU-Dispersion trägt zwar zu einer größeren Wasseraufnahme von Filmen der reinen PU-Dispersion bei, solch eine besonders gut stabilisierte PU-Dispersion zeigt nicht notwendigerweise eine zu große Wasseraufnahme einer höher gefüllten Farbe. Im Gegenteil wurden durch diese Syntheseschritte hergestellte PU-Disper-sionen erhalten, die sogar geringere Wasseraufnahmen oder Wasserempfindlichkeiten der daraus hergestellten gefüllten Farben aufwiesen, als zu erwarten war.

Die Polyurethandispersionen gemäß der Erfindung können nach folgendem Verfahren, wie in der DE 10161156 beschrieben hergestellt werden:
Wässrige Dispersionen, enthaltend ein Polyurethan, aufgebaut aus
a Diisocyanaten,
b) Diolen, von denen
b1) 10 bis 100 mol-%, bezogen auf die Gesamtmenge der Diole (b), ein Molekulargewicht von 500 bis 5000 aufweisen, und
b2) 0 bis 90 mol-%, bezogen auf die Gesamtmenge der Diole (b), ein Molekulargewicht von 60 bis 500 g/mol aufweisen,
c) von den Monomeren (a) und (b) verschiedene Monomere mit wenigstens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen, wodurch die Wasserdispergierbarkeit der Polyurethane bewirkt wird,
d) gegebenenfalls weiteren von den Monomeren (a) bis (c) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
e) gegebenenfalls von den Monomeren (a) bis (d) verschiedenen einwertigen Verbindungen mit einer reaktiven Gruppe, bei der es sich um eine alkoholische Hydroxylgruppe, eine primäre oder sekundäre Aminogruppe oder eine Isocyanatgruppe handelt, erhältlich durch Umsetzung der Monomere a), b), c) sowie gegebenenfalls d), und e) in Anwesenheit eines Katalysator, z.B. eines Zinnsalzes, wie Dibutylzinndilaurat (DE-A 199 59 6539) oder zinnfreie Katalysatoren, wie z.B. auf Basis Wismut-Neodecanoat (z.B. Borchikat® 315 der Fa. OMG Borchers GmbH, Langenfeld, Deutschland).

Die erfindungsgemäßen wässrigen Dispersionen enthalten Polyurethane, welche neben anderen Monomeren aus Diisocyanaten a) abgeleitet sind, wobei vorzugsweise solche Diisocyanate a) verwendet werden, die üblicherweise in der Polyurethanchemie eingesetzt werden. Insbesondere zu nennen sind als Monomere (a) Diisocyanate X (NCO)2, wobei X für einen aliphatischen Kohlenwasserstoffrest mit 4 bis 12 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat (HDI), Dodecamethylendiisocyanat, 1,4-Diisocyanatocyclohexan, 1-Isocyanato-3,5,5- trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanato-toluol, 4,4'-Diisocyanatodiphenylmethan, 2,4'-Diisocyanato-diphenylmethan, p-Xylylen-diisocyanat, Tetramethylxylylendiisocyanat (TMXDI), die Isomeren des Bis-(4-isocyanato-cyclohexyl)methans (HMDI) wie das trans/trans-, das cis/cis- und das cis/trans-Isomere sowie aus diesen Verbindungen bestehende Gemische. Derartige Diisocyanate sind im Handel erhältlich. Als Gemische dieser Isocyanate sind besonders die Mischungen der jeweiligen Strukturisomeren von Diisocyanatotoluol und Diisocyanatodiphenylmethan von Bedeutung, insbesondere ist die Mischung aus 80 mol-% 2,4-Diisocyanatotoluol und 20 mol-% 2,6-Diisocyanatotoluol geeignet.

Weiterhin sind die Mischungen von aromatischen Isocyanaten wie 2,4 Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte Mischungsverhältnis der aliphatischen zu aromatischen Isocyanate 4 : I bis 1 : 4 beträgt. Zum Aufbau der Polyurethane kann man als Verbindungen außer den vorgenannten auch Isocyanate einsetzen, die neben den freien Isocyanatgruppen weitere verkappte Isocyanatgruppen, z. B. Uretdiongruppen tragen. Im Hinblick auf gute Filmbildung und Elastizität kommen als Diole (b) vornehmlich höhermolekulare Diole (b1) in Betracht, die ein Molekulargewicht von etwa 500 bis 5000, vorzugsweise von etwa 1000 bis 3000 g/mol haben. Bei den Diolen (b1) handelt es sich insbesondere um Polyesterpolyole, die z. B. aus Ullmanns Enzyklopädie der technischen Chemie, 4. Auflage, Band 19, S. 62 bis 65 bekannt sind. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden.

Als sulfonierte Polyesterpolyole können auch Verbindungen eingesetzt werden, wie sie z.B. aus der EP 2 666 800 bekannt sind, z.B. das Produkt "SS55-225-130", sulfoniertes Poly-esterdiol mit freien Natriumsulfonatgruppen, Molekulargewicht 550; Crompton Corp., Middlebury, CT. Die Polycarbonsäuren können aliphatisch, cycloaliphatisch, araliphatisch, aromatisch oder heterocyclisch sein und gegebenenfalls, z. B. durch Halogenatome, substituiert und/oder ungesättigt sein. Als Beispiele hierfür seien genannt: Korksäure, Azelainsäure, Phthalsäure, Isophthalsäure, Phthalsäureanhydrid,Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren und Dimethylsulfoisophtalsäure. Bevorzugt sind Dicarbonsäuren der allgemeinen Formel HOOC-(CH2)y-COOH, wobei y eine Zahl von 1 bis 20, bevorzugt eine gerade Zahl von 2 bis 20 ist, z. B. Bernsteinsäure, Adipinsäure, Sebacinsäure und Dodecandicarbonsäure. Als mehrwertige Alkohole kommen z. B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol,Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH2)x-OH, wobei x eine Zahl von 1 bis 20, bevorzugt eine gerade Zahl von 2 bis 20 ist. Beispiele hierfür sind Ethylenglykol, Butan-1,4-diol, Hexan-1,6-diol, Octan-1,8-diol und Dodecan-1,12-diol. Weiterhin bevorzugt ist Neopentylglykol.

Ferner kommen auch Polycarbonat-Diole, wie sie z. B. durch Umsetzung von Phosgen mit einem Überschuss von den als Aufbaukomponenten für die Polyesterpolyole genannten niedermolekularen Alkohole erhalten werden können, in Betracht. Geeignet sind auch Poly-esterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH2)z-COOH ableiten, wobei z eine Zahl von 1 bis 20 ist und ein H-Atom einer Methyleneinheit auch durch einen C1- bis C4-Alkylrest substituiert sein kann. Beispiele sind ε-Caprolacton, β-Propio-lacton, γ-Butyrolacton und/oder Methyl-ε-caprolacton sowie deren Gemische. Geeignete Starterkomponenten sind z. B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lactonpolymerisate eingesetzt sein. Anstelle der Polymerisate von Lactonen können auch die entsprechenden, chemisch äquivalenten

Polykondensate der den Lactonen entsprechenden Hydroxycarbonsäuren, eingesetzt werden. Daneben kommen als Monomere (b1) Polyetherdiole in Betracht. Sie sind insbesondere durch Polymerisation von Ethylenoxid, Propylenoxid, Butylenoxid, Tetrahydrofuran, Styrol-oxid oder Epichlorhydrin mit sich selbst, z. B. in Gegenwart von BF₃ oder durch Anlagerung dieser Verbindungen gegebenenfalls im Gemisch oder nacheinander, an Startkomponenten mit reaktionsfähigen Wasserstoffatomen, wie Alkohole oder Amine, z. B. Wasser, Ethylenglykol, Propan-1,2-diol, Propan-1,3-diol, I,2-Bis(4-hydroxydiphenyl)-propan oder Anilin erhältlich. Besonders bevorzugt ist Polytetrahydrofuran eines Molekulargewichts von 240 bis 5000, und vor allem 500 bis 4500. Daneben können auch Mischungen aus Polyesterdiolen und Polyetherdiolen als Monomere (b1) eingesetzt werden. Ebenfalls geeignet sind Poly-hydroxyolefine, bevorzugt solche mit 2 endständigen Hydroxylgruppen, z. B. α,ω-Di-hydroxypolybutadien, α,ω-Dihydroxypoiymethacrylester oder α,ω-Dihydroxypolyacrylester als Monomere (c1). Solche Verbindungen sind beispielsweise aus der EP-A 622 378 bekannt. Weitere geeignete Polyole sind Polyacetale, Polysiloxane und Alkydharze.

Die Polyole können auch als Gemische im Verhältnis 0,1 : 1 bis 1 : 9 eingesetzt werden.

Die Härte und der Elastizitätsmodul der Polyurethane lassen sich erhöhen, wenn als Diole (b) neben den Diolen (b1) noch niedermolekulare Diole (b2) mit einem Molekulargewicht von etwa 60 bis 500, vorzugsweise von 62 bis 200 g/mol, eingesetzt werden.

Als Monomere (b2) werden vor allem die Aufbaukomponenten der für die Herstellung von Polyesterpolyolen genannten kurzkettigen Alkandiole eingesetzt, wobei Diole mit 2 bis 12 C-Atomen, unverzweigte Diole mit 2 bis 12 C-Atomen und einer gradzahligen Anzahl von C-Atomen sowie Pentan-1,5-diol und Neopentylglykol bevorzugt werden.

Bevorzugt beträgt der Anteil der Diole (b1), bezogen auf die Gesamtmenge der Diole (b) 10 bis 100 mol-% und der Anteil der Monomere (b2), bezogen auf die Gesamtmenge der Diole (b) 0 bis 90 mol-%. Besonders bevorzugt beträgt das Verhältnis der Diole (b1) zu den Monomeren (b2) 0,1 : 1 bis 5 : 1, besonders bevorzugt 0,2 : 1 bis 2 : 1.

Um die Wasserdispergierbarkeit der Polyurethane zu erreichen, sind die Polyurethane neben den Komponenten (a), (b) und gegebenenfalls (d) aus von den Komponenten (a), (b) und (d) verschiedenen Monomeren (c), die wenigstens eine Isocyanatgruppe oder wenigstens eine gegenüber Isocyanatgruppen reaktive Gruppe und darüber hinaus wenigstens eine hydrophile Gruppe oder eine Gruppe, die sich in eine hydrophile Gruppe überführen lässt, tragen, aufgebaut.

Im folgenden Text wird der Begriff "hydrophile Gruppen oder potentiell hydrophile Gruppen" mit "(potentiell) hydrophile Gruppen" abgekürzt. Die (potentiell) hydrophilen Gruppen reagieren mit Isocyanaten wesentlich langsamer als die funktionellen Gruppen der Monomere, die zum Aufbau der Polymerhauptkette dienen.

Der Anteil der Komponenten mit (potentiell) hydrophilen Gruppen an der Gesamtmenge der Komponenten(a), (b), (c), (d) und (e) wird im allgemeinen so bemessen, dass die Molmenge der (potentiell) hydrophilen Gruppen, bezogen auf die Gewichtsmenge aller Monomere (a) bis (e), 30 bis 1000, bevorzugt 50 bis 500 und besonders bevorzugt 80 bis 300 mmol/kg beträgt.

Bei den (potentiell) hydrophilen Gruppen kann es sich um nichtionische oder bevorzugt um (potentiell) ionische hydrophile Gruppen handeln. Als nichtionische hydrophile Gruppen kommen insbesondere Polyethylenglykolether aus vorzugsweise 5 bis 150, bevorzugt 40 bis 120 Ethylenoxid-Wiederholungseinheiten, in Betracht. Der Gehalt an Polyethylenoxid-Einheiten betragt im allgemeinen 0,1 bis 15, bevorzugt 1 bis 10 Gew.-%, bezogen auf die Gewichtsmenge aller Monomere (a) bis (e).

Bevorzugte Monomere mit nichtionischen hydrophilen Gruppen sind Polyethylenoxiddiole, Polyethylenoxidmonoole sowie die Reaktionsprodukte aus einem Polyethylenglykol und einem Diisocyanat, die einen endständig veretherten Polyethylenglykolrest tragen. Derartige Diisocyanate sowie Verfahren zu deren Herstellung sind in den Patentschriften US-A 3 905 929 und US-A 3 920 598 angegeben.

Ionische hydrophile Gruppen sind vor allem anionische Gruppen wie die Sulfonat-, die Carboxylat- und die Phosphatgruppe in Form ihrer Alkalimetall- oder Ammoniumsalze sowie kationische Gruppen wie Ammoniumgruppen, insbesondere protonierte tertiäre Aminogruppen oder quarternäre Ammoniumgruppen.

Potentiell ionische hydrophile Gruppen sind vor allem solche, die sich durch einfache Neutralisations-, Hydrolyse- oder Quaternisierungsreaktionen in die oben genannten ionischen hydrophilen Gruppen überführen lassen, also z. B. Carbonsäuregruppen oder tertiäre Aminogruppen. (Potentiell) ionische Monomere (c) sind z. B. in Ullmanns Enzyklopädie der technischen Chemie, 4. Auflage, Band 19, S. 311-313 und beispielsweise in der DE-A 14 95 745 ausführlich beschrieben.

Als (potentiell) kationische Monomere (c) sind vor allem Monomere mit tertiären Aminogruppen von besonderer praktischer Bedeutung, beispielsweise: Tris-(hydroxyalkyl)-amine, N,N'-Bis(hydroxyalkyl)-alkylamine, N-Hydroxyalkyl-dialkylamine, Tris-(aminoalkyl)-amine, N,N'-Bis(aminoalkyl)-alkylamine, N-Aminoalkyl-dialkylamine, wobei die Alkylreste und Alkandiyl-Einheiten dieser tertiären Amine unabhängig voneinander aus 1 bis 6 Kohlenstoffatomen bestehen. Weiterhin kommen tertiäre Stickstoffatome aufweisende Polyether mit vorzugsweise zwei endständigen Hydroxylgruppen, wie sie z. B. durch Alkoxylierung von zwei an Aminstickstoff gebundene Wasserstoffatome aufweisende Amine, z. B. Methylamin, Anilin oder N,N'-Dimethylhydrazin, in an sich üblicher Weise zugänglich sind, in Betracht. Derartige Polyether weisen im Allgemeinen ein zwischen 500 und 6000 g/mol liegendes Molgewicht auf.

Diese tertiären Amine werden entweder mit Säuren, bevorzugt starken Mineralsäuren wie Phosphorsäure, Schwefelsäure, Halogenwasserstoffsäuren oder starken organischen Säuren oder durch Umsetzung mit geeigneten Quaternisierungsmitteln wie C1- bis C6-Alkylhalogeniden oder Benzylhalogeniden, z. B. Bromiden oder Chloriden, in die Ammoniumsalze überführt.

Als Monomere mit (potentiell) anionischen Gruppen kommen üblicherweise aliphatische, cycloaliphatische, araliphatische oder aromatische Carbonsäuren und Sulfonsäuren in Betracht, die mindestens eine alkoholische Hydroxylgruppe oder mindestens eine primäre oder sekundäre Aminogruppe tragen. Bevorzugt sind Dihydroxyalkylcarbonsäuren, vor allem mit 3 bis 10 Kohlenstoffatomen, wie sie auch in der US-A 3 412 054 beschrieben sind. Insbesondere sind Verbindungen der allgemeinen Formel (c1)

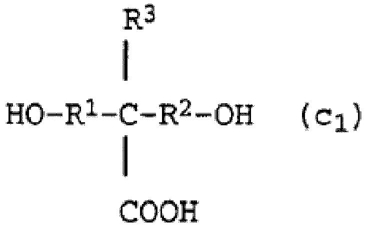

in welcher R¹ und R² für eine C1- bis C4-Alkandiyl-Einheit und R³ für eine C 1- bis C4-Alkyl-Einheit steht und vor allem Dimethylolpropionsäure (DMPA) bevorzugt. Weiterhin eignen sich entsprechende Dihydroxysulfonsäuren und Dihydroxyphosphonsäuren wie 2,3-Dihydroxy-propanphosphonsäure.

Ansonsten geeignet sind Dihydroxylverbindungen mit einem Molekulargewicht über 500 bis 10.000 g/mol mit mindestens 2 Carboxylatgruppen, die aus der DE-A 39 11 827 bekannt sind. Sie sind durch Umsetzung von Dihydroxylverbindungen mit Tetracarbonsäuredianhydriden wie Pyromellitsäuredianhydrid oder Cyclopentantetracarbonsäuredianhydrid im Molverhältnis 2 : 1 bis 1,05 : 1 in einer Polyadditionsreaktion erhältlich. Als Dihydroxylverbindungen sind insbesondere die als Kettenverlängerer aufgeführten Monomere (b2) sowie die Diole (b1) geeignet. Als Monomere (c) mit gegenüber Isocyanaten reaktiven Aminogruppen kommen Aminocarbonsäuren wie Lysin, ß-Alanin oder die in der DE-A 20 34 479 genannten Addukte von aliphatischen diprimären Diaminen an α,β-ungesättigte Carbon- oder Sulfonsäuren in Betracht. Solche Verbindungen gehorchen beispielsweise
der Formel (c2)

H₂N-R⁴-NH-R⁵-X (c2)

in der R⁴ und R⁵ unabhängig voneinander für eine C1- bis C6-Alkandiyl-Einheit, bevorzugt Ethylen und X für -COOH oder -SO₃H stehen.

Besonders bevorzugte Verbindungen der Formel (c2) sind die N-(2-Aminoethyl)-2-aminoethan-carbonsäure sowie die N-(2-Aminoethyl)-2-aminoethansulfonsäure bzw. die ent-sprechenden Alkalisalze, wobei Natrium als Gegenion besonders bevorzugt ist. Weiterhin bevorzugt sind die Addukte der oben genannten aliphatischen diprimären Diamine an 2-Acryl-amido-2-methylpropansulfonsäure, wie sie z. B. in der DE Patentschrift 19 54 090 beschrieben sind. Weitere geeignete Aminosulfonsäuren sind beispielsweise Natrium-2-((2-aminoethyl) amino)ethansul-fonat, Diaminoalkylsulfonsäure und ihre Salze, z.B. Ethylendiamino-β-ethylsulfon-säure, Ethylene diaminopropyl- oder-butylsulfonsäure, 1, 2- oder 1,3-Propylendiamino-β-ethyl-sulfonsäure, Sofern Monomere mit potentiell ionischen Gruppen eingesetzt werden, kann deren Überführung in die ionische Form vor, während, jedoch vorzugsweise nach der Isocyanat Poly-addition erfolgen, da sich die ionischen Monomeren in der Reaktionsmischung häufig nur schwer lösen. Besonders bevorzugt liegen die Sulfonat- oder Carboxylatgruppen in Form ihrer Salze mit einem Alkaliion oder einem Ammoniumion als Gegenion vor.

Die Monomere (d), die von den Monomeren (a) bis (c) verschieden sind und welche gegebenenfalls auch Bestandteile des Polyurethans sind, dienen im Allgemeinen der Vernetzung oder der Kettenverlängerung. Es sind im allgemeinen mehr als zweiwertige nichtphenolische Alkohole, Amine mit 2 oder mehr primären und/oder sekundären Aminogruppen sowie Verbindungen, die neben einer oder mehreren alkoholischen Hydroxylgruppen eine oder mehrere primäre und/oder sekundäre Aminogruppen tragen.

Alkohole mit einer höheren Wertigkeit als 2, die zur Einstellung eines gewissen Verzweigungs- oder Vernetzungsgrades dienen können, sind z. B. Trimethylolpropan, Glycerin oder Zucker. Ferner kommen Monoalkohole in Betracht, die neben der Hydroxylgruppe eine weitere gegenüber Isocyanaten reaktive Gruppe tragen wie Monoalkohole mit einer oder mehreren primären und/oder sekundären Aminogruppen, z. B. Monoethanolamin. Polyamine mit 2 oder mehr primären und/oder sekundären Aminogruppen werden vor allem dann eingesetzt, wenn die Kettenverlängerung bzw. Vernetzung in Gegenwart von Wasser stattfinden soll, da Amine in der Regel schneller als Alkohole oder Wasser mit Isocyanaten reagieren.

Das ist häufig dann erforderlich, wenn wässrige Dispersionen von vernetzten Polyurethanen oder Polyurethanen mit hohem Molgewicht gewünscht werden. In solchen Fällen geht man so vor, dass man Prepolymere mit Isocyanatgruppen herstellt, diese rasch in Wasser dispergiert und anschließend durch Zugabe von Verbindungen mit mehreren gegenüber Isocyanaten reaktiven Aminogruppen kettenverlängert oder vernetzt.

Hierzu geeignete Amine sind im allgemeinen polyfunktionelle Amine des Molgewichtsbereiches von 32 bis 500 g/mol, vorzugsweise von 60 bis 300 g/mol, welche mindestens zwei Aminogruppen, ausgewählt aus der Gruppe der primären und sekundären Aminogruppen, enthalten. Beispiele hierfür sind Diamine wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclohexylmethan, 1,4-Diamino-cyclohexan, Aminoethylethanolamin, Hydrazin, Hydrazinhydrat oder Triamine wie Diethylentriamin oder 1,8-Diamino-4-aminomethyloctan. Die Amine können auch in blockierter Form, z. B. in Form der entsprechenden Ketimine (siehe z. B. CA-A 1 129 128), Ketazine (vgl. z. B. die US-A 4 269 748) oder Aminsalze (s. US-A 4 292 226) eingesetzt werden. Auch Oxazolidine, wie sie beispielsweise in der US-A 4 192 937 verwendet werden, stellen verkappte Polyamine dar, die für die Herstellung der erfindungsgemäßen Polyurethane zur Kettenverlängerung der Prepolymeren eingesetzt werden können. Bei der Verwendung derartiger verkappter Polyamine werden diese im allgemeinen mit den Prepolymeren in Abwesenheit von Wasser vermischt und diese Mischung anschließend mit dem Dispersionswasser oder einem Teil des Dispersionswassers vermischt, so dass hydrolytisch die entsprechenden Polyamine freigesetzt werden. Bevorzugt werden Gemische von Di- und Triaminen verwendet, besonders bevorzugt Gemische von Isophorondiamin (IPDA) und Diethylentriamin (DETA).

Die Polyurethane enthalten bevorzugt 1 bis 30, besonders bevorzugt 4 bis 25 mol-%, bezogen auf die Gesamtmenge der Komponenten (b) und (d) eines Polyamins mit mindestens 2 gegenüber Isocyanaten reaktiven Aminogruppen als Monomere (d). Alkohole mit einer höheren Wertigkeit als 2, die zur Einstellung eines gewissen Verzweigungs- oder Vernetzungsgrades dienen können, sind z. B. Trimethylolpropan, Glycerin oder Zucker. Für den gleichen Zweck können auch als Monomere (d) höher als zweiwertige Isocyanate eingesetzt werden. Handelsübliche Verbindungen sind beispielsweise das Isocyanurat oder das Biuret des Hexamethylendiisocyanats.

Monomere (e), die gegebenenfalls mitverwendet werden, sind Monoisocyanate, Monoalkohole und monoprimäre und -sekundäre Amine. Im Allgemeinen beträgt ihr Anteil maximal 10 mol-%, bezogen auf die gesamte Molmenge der Monomere. Diese monofunktionellen Verbindungen tragen üblicherweise weitere funktionelle Gruppen wie olefinische Gruppen oder Carbonylgruppen und dienen zur Einführung von funktionellen Gruppen in das Polyurethan, die die Dispergierung bzw. die Vernetzung oder weitere polymeranaloge Umsetzung des Polyurethans ermöglichen. In Betracht kommen hierfür Monomere wie Isopropenyl-α,α-dimethylbenzylisocyanat (TMI) und Ester von Acryl- oder Methacrylsäure wie Hydroxyethylacrylat, Hydroxyethylmethacrylat, Hydroxypropylacrylat oder Hydroxypropylmethacrylat.

Beschichtungen mit einem besonders guten Eigenschaftsprofil erhält man vor allem dann, wenn als Monomere (a) im Wesentlichen nur aliphatische Diisocyanate, cycloaliphatische Diisocyanate oder TMXDI und als Monomer (b1) im Wesentlichen nur Polyesterdiole, aufgebaut aus den genannten aliphatischen Diolen und Disäuren, eingesetzt werden. Diese Monomerkombination wird in hervorragender Weise ergänzt als Komponente (c) durch Diaminosäuresalze; ganz besonders durch die N-(2-Aminoethyl)-2-aminoethansulfonsäure, die N-(2-Aminoethyl)-2-amino-ethancarbonsäure bzw. ihre entsprechenden Alkalisalze, wobei die Na-Salze am besten geeignet sind, und eine Mischung von DETA/IPDA als Komponente (d). Auf dem Gebiet der Polyurethanchemie ist allgemein bekannt, wie das Molekulargewicht der Polyurethane durch Wahl der Anteile der miteinander reaktiven Monomere sowie dem arithmetischen Mittel der Zahl der reaktiven funktionellen Gruppen pro Molekül eingestellt werden
kann.

Normalerweise werden die Komponenten (a) bis (e) sowie ihre jeweiligen Molmengen so gewählt, dass das Verhältnis A : B mit A) der Molmenge an Isocyanatgruppen und B) der Summe aus der Molmenge der Hydroxylgruppen und der Molmenge der funktionellen Gruppen, die mit Isocyanaten in einer Additionsreaktion reagieren können 0,5 : 1 bis 2 : 1, bevorzugt 0,8 : 1 bis 1,5 : 1, besonders bevorzugt 0,9 : 1 bis 1,2 : 1 betragt. Ganz besonders bevorzugt liegt das Verhältnis A : B möglichst nahe an 1 : 1.

Die eingesetzten Monomere (a) bis (e) tragen im Mittel üblicherweise 1,5 bis 2,5, bevorzugt 1,9 bis 2,1, besonders bevorzugt 2,0 Isocyanatgruppen bzw. funktionelle Gruppen, die mit Isocyanaten in einer Additionsreaktion reagieren können. Die Polyaddition der Komponenten (a) bis (e) zur Herstellung des im den erfindungsgemäßen wässrigen Dispersionen vorliegenden Polyurethans kann bei Reaktionstemperaturen von 20 bis 180°C, bevorzugt 70 bis 150°C unter Normaldruck oder unter autogenem Druck erfolgen.

Die erforderlichen Reaktionszeiten liegen üblicherweise im Bereich von 1 bis 20 Stunden, insbesondere im Bereich von 1,5 bis 10 Stunden. Es ist auf dem Gebiet der Polyurethanchemie bekannt, wie die Reaktionszeit durch eine Vielzahl von Parametern wie Temperatur, Konzentration der Monomere, Reaktivität der Monomeren beeinflusst wird. Die Polyaddition der Monomere a), b), c) sowie gegebenenfalls d) und e) zur Herstellung der erfindungsgemäßen PU-Dispersion erfolgt in Anwesenheit eines Katalysators.

Es ist auf dem Gebiet der Polyurethanchemie bekannt, wie die Reaktionszeit durch eine Vielzahl von Parametern wie Temperatur, Konzentration der Monomere, Reaktivität der Monomeren beeinflusst wird.

Zur Beschleunigung der Reaktion der Diisocyanate können die üblichen Katalysatoren mit verwendet werden. Dafür kommen prinzipiell alle in der Polyurethanchemie üblicherweise verwendeten Katalysatoren in Betracht. Diese sind beispielsweise organische Amine, insbesondere tertiäre aliphatische, cycloaliphatische oder aromatische Amine, und/oder Lewis-saure organische Metallverbindungen. Als Lewis-saure organische Metallverbindungen kommen z.B. Zinnverbindungen in Frage, wie beispielsweise Zinn-(11)-salze von organischen Carbonsäuren, z.B. Zinn(II)-acetat, Zinn(II)-octoat, Zinn(II)-ethylhexoat und Zinn(II)-laurat und die Dialkylzinn(IV)-salze von organischen Carbonsäuren, z.B.Dimethylzinn-diacetat, Dibutylzinndiacetat, Dibutylzinn-dibutyrat, Dibutylzinn-bis(2-ethylhexanoat), Dibutylzinn-dilaurat, Dibutylzinn-maleat, Dioctylzinn-dilaurat und Dioctylzinn-diacetat. Auch Metallkomplexe wie Acetylacetonate des Eisens, Titans, Aluminiums, Zirkons, Mangans, Nickels und Cobalts sind möglich. Weitere Metallkatalysatoren werden von Blank et al. in Progress in Organic Coatings, 1999, Vol. 35, Seiten 19-29 beschrieben.

Bevorzugte Lewis-saure organische Metallverbindungen sind Dimethylzinn-diacetat, Dibutylzinn-dibutyrat, Dibutylzinn-bis(2-ethylhexanoat), Dibutylzinn-dilaurat, Diocytzinndilaurat, Zirkon-Acetylacetonat und Zirkon-2,2,6,6-tetramethyl-3,5-heptandionat.

Auch Wismut- und Cobaltkatalysatoren sowie Cäsiumsalze können als Katalysatoren eingesetzt werden. Als Cäsiumsalze kommen dabei solche Verbindungen in Betracht, in denen folgende Anionen eingesetzt werden: F-, Cl-, ClO-, Cl03-, Cl04-, Br-, J-, JO3-, CN-, OCN-, NO2-, NO3-, HCO3-, CO3²⁻, S2-, SH-, HSO3-, SO3²⁻, HSO4-, SO4²⁻, S2O2²⁻, S2O4²⁻, S2Os2-, S2O5²⁻, S2O12⁻, S2Oa2-, H2PO2-, H2PO4-, HPO4²⁻, PO4³⁻, P2O14-, (OCnH2n+1)-, (CnH2n-102)-, (CnH2n-302)- sowie (Cn+1H2n-204)2-, wobei n für die Zahlen 1 bis 20 steht.

Bevorzugt sind dabei Cäsiumcarboxylate, bei denen das Anion den Formeln (CnH2n-102)- sowie (Cn+1H2n-204)2- mit n gleich 1 bis 20, gehorcht. Besonders bevorzug- te Cäsiumsalze weisen als Anionen Monocarboxylate der allgemeinen Formel (CnH2n-102)- auf, wobei n für die Zahlen 1 bis 20 steht. Hierbei sind insbesondere zu erwähnen Formiat, Acetat, Propionat, Hexanoat und 2-Ethylhexanoat. Als Polymerisationsapparate kommen Rührkessel in Betracht, insbesondere dann, wenn durch Mitverwendung von Lösungsmitteln für eine niedrige Viskosität und eine gute Wärmeabfuhr gesorgt ist. Wird die Reaktion in Substanz durchgeführt, eignen sich aufgrund der meist hohen Viskositäten und der meist nur kurzen Reaktionszeiten besonders Extruder, insbesondere selbstreinigende Mehrschneckenextruder.

Im sogenannten "Präpolymer-Mischverfahren" wird zunächst ein Präpolymer hergestellt wird, das Isocyanat-Gruppen trägt. Die Komponenten (a) bis (d) werden hierbei so gewählt, dass das definitionsgemäße Verhältnis A : B größer 1,0 bis 3, bevorzugt 1,05 bis 1,5 beträgt. Das Präpolymer wird zuerst in Wasser dispergiert und gleichzeitig und/oder anschließend durch Reaktion der Isocyanat-Gruppen mit Aminen, die mehr als 2 gegenüber Isocyanaten reaktive Aminogruppen tragen, vernetzt oder mit Aminen die 2 gegenüber Isocyanaten reaktive Aminogruppen tragen, kettenverlängert. Eine Kettenverlängerung findet auch dann statt, wenn kein Amin zugesetzt wird. In diesem Fall werden Isocyanatgruppen zu Amingruppen hydrolysiert, die mit noch verbliebenen Isocyanatgruppen der Präpolymere unter Kettenverlängerung abreagieren. Die mittlere Teilchengröße (z-Mittelwert), gemessen mittels dynamischer Lichtstreuung mit dem Malvern® Autosizer 2 C, der so hergestellten Polyurethandispersionen ist nicht erfindungswesentlich und beträgt im allgemeinen <1000 nm, bevorzugt <500 nm , 40 <nm, besonders bevorzugt < 200 nm und ganz besonders bevorzugt zwischen 20 und unter 200 nm.

Die Polyurethandispersionen haben im Allgemeinen einen Feststoffgehalt von 10 bis 75, bevorzugt von 20 bis 65 Gew.-% und eine Viskosität von 10 bis 500 mPas (ICI Kegel/Platten Viskosimeter mit Messkopf C in Anlehnung an ASTM D4287), gemessen bei einer Temperatur von 20°C und einer Schergeschwindigkeit von 250 s-1)

Bevorzugte Lösungsmittel sind mit Wasser unbegrenzt mischbar, weisen einen Siedepunkt bei Normaldruck von 40 bis 100°C auf und reagieren nicht oder nur langsam mit den Monomeren. Meistens werden die Dispersionen nach einem der folgenden Verfahren hergestellt: Nach dem "Acetonverfahren" wird in einem mit Wasser mischbaren und bei Normaldruck unter 100°C siedenden Lösungsmittel aus den Komponenten (a) bis (c) ein ionisches Polyurethan hergestellt. Es wird so viel Wasser zugegeben, bis sich eine Dispersion bildet, in der Wasser die kohärente Phase darstellt. Das "Prepolymer-Mischverfahren" unterscheidet sich vom Acetonverfahren darin, dass nicht ein ausreagiertes (potentiell) ionisches Polyurethan, sondern zunächst ein Prepolymer hergestellt wird, das Isocyanat-Gruppen tragt. Die Komponenten werden hierbei so gewählt, dass das definitionsgemäße Verhältnis A: B größer 1,0 bis 3, bevorzugt 1,05 bis 1,5 beträgt. Das Prepolymer wird zuerst in Wasser dispergiert und anschließend gegebenenfalls durch Reaktion der Isocyanat-Gruppen mit Aminen, die mehr als 2 gegenüber Isocyanaten reaktive Aminogruppen tragen, vernetzt oder mit Aminen, die 2 gegenüber Isocyanaten reaktive Aminogruppen tragen, kettenverlängert. Eine Kettenverlängerung findet auch dann statt, wenn kein Amin zugesetzt wird. In diesem Fall werden Isocyanatgruppen zu Aminogruppen hydrolysiert, die mit noch verbliebenen Isocyanatgruppen der Prepolymere unter Kettenverlängerung abreagieren. Üblicherweise wird, falls bei der Herstellung des Polyurethans ein Lösungsmittel mitverwendet wurde, der größte Teil des Lösungsmittels aus der Dispersion entfernt, beispielsweise durch Destillation bei vermindertem Druck. Bevorzugt weisen die Dispersionen einen Lösungsmittelgehalt von weniger als 10 Gew.-% auf und sind besonders bevorzugt frei von Lösungsmitteln. Die Dispersionen haben im Allgemeinen einen Feststoffgehalt von 10 bis 75, bevorzugt von 20 bis 65 Gew.-% und eine Viskosität von 10 bis 500 mPas (gemessen bei einer Temperatur von 20°C und einer Schergeschwindigkeit von 250 s-1).

Wäßrige Acrylatdispersionen sind Standardbindemittel für Fassadenfarben und Dachbeschichtungen geworden, z.B. als Reparaturfarben. Sie liefern stabile, langlebige, wasser- und wetterfeste, dekorative Beschichtungen, meist auf anorganischen Baustoffen, aber auch auf Holz; Altanstrichen und -substraten oder Metalloberflächen. Zum Schutz von flachen Dächern werden bei der Erstausstattung und bei Reparatur vorgefertigte Materialien als Rollenware, z.B. bituminierte Faser- oder Vliesstoffe oder elastomere Materialien, wie z.B. EPDM-Kautschuk oder thermoplastische Elastomere verarbeitet. Eine andere Möglichkeit ist die Verwendung von zweikomponentigen, flüssigen Kunststoffpräparationen, wie z.B. Epoxyharzen oder Polyurethanen, die aufgerollt oder aufgesprüht werden können. Diesen Materialien zeichnen sich durch eine hohe Elastizität und eine hohe Alterungsbeständigkeit aus.

Zur Beschichtung von horizontalen Dachflächen können auch dispersionsgebundene Farben verwendet werden, ähnlich den Farben von Außenanstrichen. Diese Beschichtungen sollten jedoch ebenfalls besonders elastisch sein, damit sie im Schadensfall des Untergrunds (Risse, etc.) nicht vorzeitig versagen, und Regenwasser in das Gebäude eindringen kann. Zusätzlich müssen diese Farben in besonderer Weise wetterfest und UV-beständig sein. An dispersionsgebundene Farben für die horizontale Dachbeschichtung werden also erhöhte Ansprüche gestellt, die von den üblichen Dispersionsbindemitteln abweichen können. Dispersionsbindemittel für die horizontale Dachbeschichtung werden in der Patentliteratur meist nicht gesondert beschrieben, so dass zur Betrachtung des Standes der Technik auf Fassadenfarbenbindemittel zurückgegriffen werden muss.

In der EP 771 328 sind beispielsweise derartige Bindemittel des Stands der Technik beschrieben, so in den Beispielen A, J und K.

DE 10 161 156 beschreibt im Wesentlichen eine wasserbasierte Polyurethandispersion, wie sie auch für gefüllte, horizontale Dachbeschichtungen eingesetzt werden kann.

Durch die erfindungsgemäßen Polyurethandispersionen mit einen Gehalt von Polyalkylenoxid von mindestens 10 g/kg Polyurethan und einen Gehalt eines sulfonierten Rohstoffs von mindestens 25 mmol pro kg ist es möglich, Beschichtungen mit hoher Reißkraft und Reißdehnung herzustellen.

Aus ökologischen Gründen wird eine Verfilmung des Polyurethan-Bindemittels im Bereich von 0 bis 40°C angestrebt, so dass keine oder nur geringe Mengen eines Filmbildehilfsmittels benötigt werden. Erfindungsgemäß sind deshalb Polyurethan-Bindemittel bevorzugt mit einer Mindestfilmbildetemperatur von < 0°C bis +40°C. Besonders bevorzugt sind Polyurethan-Bindemittel mit einer Mindestfilmbildetemperatur von < 0°C bis 20°C.

Die nach dem erfindungsgemäßen Verfahren zugänglichen wässrigen Polyurethandispersionen weisen Polymerisatteilchen auf, die eine gewichtsmittlere Teilchendurchmesser D_{w} im Bereich > 10 bis < 500 nm, bevorzugt > 20 bis < 400 nm und insbesondere bevorzugt > 30 nm bis ≤ 300 nm aufweisen. Die Bestimmung der gewichtsmittleren Teilchendurchmesser ist dem Fachmann bekannt und erfolgt beispielsweise über die Methode der Analytischen Ultrazentrifuge. Unter gewichtsmittlerem Teilchendurchmesser wird in dieser Schrift der nach der Methode der Analytischen Ultrazentrifuge ermittelte gewichtsmittlere D_{w50}-Wert verstanden (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175).

Die nach dem erfindungsgemäßen Verfahren zugänglichen wässrigen Polyurethandispersionen mit gewichtsmittleren Teilchendurchmessern D_{w} < 400 nm weisen eine überraschend gute Flexibilität, auch bei tiefen Temperaturen auf und eignen sich daher besonders als Bindemittel für flexible Dachbeschichtungen und andere Anstrichanwendungen.

Ferner sind aus den erfindungsgemäßen wässrigen Polymerisatdispersionen in einfacher Weise (beispielsweise Gefrier- oder Sprühtrocknung) die entsprechenden Polymerisatpulver zugänglich. Diese erfindungsgemäß zugänglichen Polymerisatpulver lassen sich ebenfalls als Komponente bei der Herstellung von Beschichtungsmitteln für flexible Dachbeschichtungen sowie andere Anstrichanwendungen, einschließlich der Modifizierung von mineralischen Bindemitteln einsetzen.

Die wässrige Polyurethandispersion weist üblicherweise einen Feststoffgehalt von 20 bis 70 Gew.-%, vorzugsweise 35 bis 60 Gew.-%, auf.

Die erhaltene wässrige Polyurethandispersion kann als solche oder gemischt mit weiteren, in der Regel filmbildenden, Polymeren als Bindemittelzusammensetzung in wässrigen Beschichtungsmitteln, verwendet werden.

Selbstverständlich können die nach dem erfindungsgemäßen Verfahren zugänglichen erfindungsgemäßen wässrigen Polyurethandispersionen auch als Komponente bei der Herstellung von Klebstoffen, Dichtmassen, Kunststoffputzen, Papierstreichmassen, Faservliesen, und Beschichtungsmitteln für organische Substrate sowie zur Modifizierung von mineralischen Bindemitteln eingesetzt werden.

Ein weiterer Gegenstand der Erfindung ist ein Beschichtungsmittel in Form einer wässrigen Zusammensetzung, enthaltend
- wenigstens eine erfindungsgemäße Polyurethandispersion, wie zuvor definiert,
- gegebenenfalls wenigstens einen (an)organischen Füllstoff und/oder wenigstens ein (an)organisches Pigment,
- gegebenenfalls wenigstens ein übliches Hilfsmittel, und
- Wasser.

Die erfindungsgemäßen Bindemittelzusammensetzungen kommen in wässrigen Anstrichmittelnfür flexible Dachbeschichtungen zum Einsatz.

Füllstoffe können zur Erhöhung der Deckkraft und/oder zur Einsparung von Weißpigmenten eingesetzt werden. Zur Einstellung der Deckkraft des Farbtons und der Farbtiefe werden vorzugsweise Abmischungen aus Farbpigmenten und Füllstoffen eingesetzt.

Geeignete Pigmente sind beispielsweise anorganische Weißpigmente wie Titandioxid, vorzugsweise in der Rutilform, Bariumsulfat, Zinkoxid, Zinksulfid, basisches Bleicarbonat, Antimontrioxid, Lithopone (Zinksulfid + Bariumsulfat) oder farbige Pigmente, beispielsweise Eisenoxide, Ruß, Graphit, Zinkgelb, Zinkgrün, Ultramarin, Manganschwarz, Antimonschwarz, Manganviolett, Pariser Blau oder Schweinfurter Grün. Neben den anorganischen Pigmenten können die erfindungsgemäßen Dispersionsfarben auch organische Farbpigmente, z. B. Sepia, Gummigutt, Kasseler Braun, Toluidinrot, Pararot, Hansagelb, Indigo, Azofarbstoffe, anthrachinoide und indigoide Farbstoffe sowie Dioxazin, Chinacridon-, Phthalocyanin-, Isoindolinon- und Metallkomplexpigmente enthalten. Geeignet sind auch synthetische Weißpigmente mit Lufteinschlüssen zur Erhöhung der Lichtstreuung, wie die Ropaque®- und AQACell®-Dispersionen. Weiterhin geeignet sind die Luconyl®-Marken der Fa. BASF SE, wie z.B. das Lyconyl®-Gelb, Lyconyl®-Braun und Luconyl®-Rot, insbesondere die transparanten Varianten.

Geeignete Füllstoffe sind z. B. Alumosilicate, wie Feldspäte, Silicate, wie Kaolin, Talkum, Glimmer, Magnesit, Tobermorit, Xonolit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid etc.. In flexiblen Dachbeschichtungen und in Anstrichmitteln werden naturgemäß feinteilige Füllstoffe bevorzugt. Die Füllstoffe können als Einzelkomponenten eingesetzt werden. In der Praxis haben sich jedoch Füllstoffmischungen besonders bewährt, z. B. Calciumcarbonat/Kaolin, Calciumcarbonat/Talkum. Glänzende Beschichtungsmittel weisen in der Regel nur geringe Mengen sehr feinteiliger Füllstoffe auf oder enthalten keine Füllstoffe.

Feinteilige Füllstoffe können auch zur Erhöhung der Deckkraft und/oder zur Einsparung von Weißpigmenten eingesetzt werden. Zur Einstellung der Deckkraft des Farbtons und der Farbtiefe werden vorzugsweise Abmischungen aus Farbpigmenten und Füllstoffen eingesetzt.

Eine besonders hohe Reißkraft ohne besondere Nachteile bei der Reißdehnung wird mit den erfindungsgemäßen Bindemitteln erreicht, wenn man besonders feinteilige Füllstoffe einsetzt, z.B. Calciumcarbonat mit einer mittleren Partikelgröße von < 2µm. Derartige Produkte werden oft auch als Slurry in Wasser bereits vordispergiert angeboten, was eine besonders einfache Farbherstellung ermöglicht. Geeignete Calciumcarbonatslurries sind beispielsweise erhältlich von der Fa. Omya, Oftringen, Schweiz unter dem Handelsnamen Hydrocarb, z.B. die Type Hydrocarb 95 mit einer mittleren Partikelgröße von 0,7 µm.

Der Anteil der Pigmente kann, durch die Pigmentvolumenkonzentration (PVK), beschrieben werden. Erfindungsgemäße, elastische Dachbeschichtungsmittel haben eine PVK im Bereich von 10 bis 40, wobei die Bindemittel natürlich auch für Klarlackanwendungen geeignet sind, in denen keine oder nur sehr geringen Anteile an Pigmenten und/oder Füllstoffen zugesetzt sind. Die Elastizität (Reißdehnung) ist meist umso größer, je mehr Bindemittel in der Beschichtung eingesetzt wird.

Das erfindungsgemäße Beschichtungsmittel für die flexible Dachbeschichtung kann neben der Polymerdispersion noch weitere Hilfsmittel enthalten.

Zu den üblichen Hilfsmitteln zählen neben den bei der Polymerisation eingesetzten Emulgatoren, Netz- oder Dispergiermittel, wie Natrium-, Kalium- oder Ammoniumpolyphosphate, Alkalimetall- und Ammoniumsalze von Acrylsäure- oder Maleinsäureanhydridcopolymeren, Polyphosphonate, wie 1-Hydroxyethan-1,1-diphosphonsaures Natrium sowie Naphthalinsulfonsäuresalze, insbesondere deren Natriumsalze.

Weitere geeignete Hilfsmittel sind Verlaufsmittel, Entschäumer, Biozide und Verdicker. Geeignete Verdicker sind z. B. Assoziativverdicker, wie Polyurethanverdicker. Die Menge des Verdickers beträgt vorzugsweise weniger als 1 Gew.-%, besonders bevorzugt weniger als 0,6 Gew.-% Verdicker, bezogen auf Feststoffgehalt des Anstrichmittels.

Weiterhin geeignete Hilfsmittel sind Filmbildehilfs- oder Koaleszenzhilfsmittel. Bevorzugt werden beispielsweise Testbenzin, Ethylenglykol, Propylenglykol, Glycerin, Ethanol, Methanol, wassermischbare Glykolether und deren Acetate wie Diethylenglykol,1-Methoxy-2-propanol, 2-Amino-2-methyl-1-propanol, Isooctanol, Butylglykol, Butyldiglykol, Diethylenglykol-Monobutylether, Dipropylenglykolmonomethyl- oder Dipropylenglykolmonobutylether, Dipropylenglykol-methylether, Dipropylenglykol-propylether, Dipropylenglykol-n-butylether, Tripropylenglykoln-butylether, Propylenglykolphenylether, Butylglykolacetat, Butyldiglykolacetat, 2,2,4-Trimethyl-1,3-pentandiolmonoisubutyrat, Disobutylester langkettiger Dicarbonsäuren wie Lusolvan® FBH oder Tripropylenglykolmonoisobutyrat eingesetzt.

Die Herstellung der erfindungsgemäßen Anstrichmittel erfolgt in bekannter Weise durch Abmischen der Komponenten in hierfür üblichen Mischvorrichtungen. Es hat sich bewährt, aus den Pigmenten, Wasser und gegebenenfalls den Hilfsmitteln eine wässrige Paste oder Dispersion zu bereiten, und anschließend erst das polymere Bindemittel, d. h. in der Regel die wässrige Dispersion des Polymeren mit der Pigmentpaste bzw. Pigmentdispersion zu vermischen.

Die erfindungsgemäßen Anstrichmittel enthalten in der Regel 30 bis 75 Gew.-% und vorzugsweise 40 bis 65 Gew.-% nichtflüchtige Bestandteile. Hierunter sind alle Bestandteile der Zubereitung zu verstehen, die nicht Wasser sind, zumindest aber die Gesamtmenge an Bindemittel, Pigment und Hilfsmittel, bezogen auf den Feststoffgehalt des Anstrichmittels. Bei den flüchtigen Bestandteilen handelt es sich vorwiegend um Wasser.

Das erfindungsgemäße Anstrichmittel kann in üblicher Weise auf Substrate aufgebracht werden, z. B. durch Streichen, Spritzen, Tauchen, Rollen, Rakeln etc.

Es wird als flexibles Dachbeschichtungsmittel, d. h. zum Beschichten von flachen oder geneigten Gebäudeteilen verwendet. Es kann sich dabei um mineralische Untergründe wie Putze, Gips- oder Gipskartonplatten, Mauerwerk oder Beton, um Holz, Holzwerkstoffe, Metall oder Kunststoff, z. B. PVC, thermoplastisches Polyurethan, EPDM, Epoxidharz, Polyurethanharz, Acrylatharz oder Bitumenmaterial als Beschichtung oder Bahnenware handeln.

Die erfindungsgemäßen Anstrichmittel zeichnen sich aus durch einfache Handhabung, gute Verarbeitungseigenschaften und verbesserte Elastizität aus. Die Anstrichmittel sind schadstoffarm. Sie haben gute anwendungstechnische Eigenschaften, z. B. eine gute Wasserfestigkeit, gute Nasshaftung, gute Blockfestigkeit, eine gute Überstreichbarkeit, eine gute Witterungsbeständigkeit und sie zeigen beim Auftragen einen guten Verlauf. Das verwendete Arbeitsgerät lässt sich leicht mit Wasser reinigen.

Die Erfindung wird anhand der folgenden nicht einschränkenden Beispiele näher erläutert.

### Beispiel 1

| | |
|---|---|
| 456,05 g | eines Polyesterdiols aus Adipinsäure, Neopentylglykol und Hexandiol-1,6 der OH-Zahl 56 |
| 39,69 g | eines Butanol-gestarteten Polyethylenoxids der OH-Zahl 15 |
| 0,1932 g | Dibutylzinndilaurat wurden in einem Rührkolben vorgelegt und auf 60°C gebracht. Dazu wurden 132,05 g 4,4'-Diisocyanatodicyclohexylmethan und 67,69 g (0,3185 mol) Isophorondiisocyanatüber 5 Minuten zugetropft. Dann wurde mit 117,20 g Aceton verdünnt und 1 Stunde bei 74°C gerührt. Danach wurde 20,30 g 1,4 Butandiol schnell zugegeben und weiter bei 74°C gerührt. Nach 2 Stunden wurde mit 500,98 g Aceton verdünnt und auf 50°C abgekühlt. Der NCO-Gehalt wurde zu 1,01 Gew.-% bestimmt (berechnet: 1,00 Gew.-%). |

Bei 50°C wird 30,81 g einer 50%igen wäßrigen Lösung des Natriumsalzes der 2-Aminoethyl-2-aminoethansulfonsäure innerhalb von 5 Minuten zugegeben und noch 5 Minuten weiter gerührt. Dann wird bei 50°C innerhalb von 24 Minuten mit 743,47 g Wasser verdünnt und dann mit 4,21 g Diethylentriamin und 2,06 g Isophorondiamin in 36,92 g Wasser kettenverlängert.
Nach Destillation des Acetons enthielt man eine feinteilige Dispersion mit ca. 45% Feststoffgehalt und 91,7 nm Partikelgröße bei einem pH-Wert von 9,46.

### Vergleichsbeispiel 1

| | |
|---|---|
| 456,05 g | eines Polyesterdiols aus Adipinsäure, Neopentylglykol und Hexandiol-1,6 der OH-Zahl 56 |
| 39,69 g | eines Butanol-gestarteten Polyethylenoxids der OH-Zahl 15 |
| 0,1932 g | Dibutylzinndilaurat wurden in einem Rührkolben vorgelegt und auf 60°C gebracht. Dazu wurden 132,05 g 4,4'-Diisocyanatodicyclohexylmethan und 67,69 g (0,3185 mol) Isophorondiisocyanatüber 5 Minuten zugetropft. Dann wurde mit 117,20 g Aceton verdünnt und 1 Stunde bei 74°C gerührt. Danach wurde 20,30 g 1,4 Butandiol schnell zugegeben und weiter bei 74°C gerührt. Nach 2 Stunden wurde mit 500,98 g Aceton verdünnt und auf 50°C abgekühlt. Der NCO-Gehalt wurde zu 1,01 Gew.-% bestimmt (berechnet: 1,00 Gew.-%). |

Bei 50°C wird 24,97 g einer 50%igen wäßrigen Lösung des Natriumsalzes des Michael-Addukts von Acrylsäure an Ethylendiamin innerhalb von 5 Minuten zugegeben und noch 5 Minuten weiter gerührt. Dann wird bei 50°C innerhalb von 24 Minuten mit 743,47 g Wasser verdünnt und dann mit 4,21 g Diethylentriaminund 2,06 g Isophorondiaminin 36,92 g Wasser kettenverlängert.
Nach Destillation des Acetons enthielt man eine feinteilige Dispersion mit ca. 45% Feststoffgehalt und 96,8 nm Partikelgröße bei einem pH-Wert von 9,23.

### Beispiel 2

| | |
|---|---|
| 352,2 g | eines Polyesterdiols aus Adipinsäure, Neopentylglykol und Hexandiol-1,6 der OH-Zahl 56 |
| 42,85 g | eines Butanol-gestarteten Polyethylenoxids der OH-Zahl 15 |

0,26 g zinnfreier Katalysator auf Basis Bismuth-Neodecanoat, 75%ig in Aceton (Borchikat 315, OMG Borchers) wurden in einem Rührkolben vorgelegt und auf 56°C gebracht. Dazu wurden 72,83 g 4,4'-Diisocyanatodicyclohexylmethan und 61,3 g (0,3185 mol) Isophorondiisocyanat über 5 Minuten zugetropft. Dann wurde mit 96,32 g Aceton verdünnt und 1 Stunde und 15 Minuten bei 76°C gerührt. Danach wurde 18,39 g 1,4 Butandiol schnell zugegeben und weiter bei 74°C gerührt. Nach 2 Stunden wurde mit 413,41 g Aceton verdünnt und auf 50°C abgekühlt. Der NCO-Gehalt wurde zu 1,27 Gew.-% bestimmt (berechnet: 1,31 Gew.-%).

Bei 50°C wird 39,21 g einer 50%igen wäßrigen Lösung des Natriumsalzes der 2-Aminoethyl-2-aminoethansulfonsäure innerhalb von 5 Minuten zugegeben und noch 5 Minuten weiter gerührt. Dann wird bei 50°C innerhalb von 15 Minuten mit 664,15 g Wasser verdünnt und dann mit 3,81 g Diethylentriaminund 1,86 g Isophorondiaminin 36,92 g Wasser kettenverlängert.
Nach Destillation des Acetons enthielt man eine feinteilige Dispersion mit ca. 40,8% Feststoffgehalt und 93 nm Partikelgröße bei einem pH-Wert von 9,74.

### Beispiel 3

81,94 g 2-Butyl-2-ethyl-1,3-propanediol, 39,69 g eines Butanol-gestarteten Polyethylenoxids der OH-Zahl 15, 258,76 g PolyTHF 2000 und 0,4 g zinnfreier Katalysator auf Basis Bismuth-Neodecanoat, 75%ig in Aceton (Borchikat 315, OMG Borchers) wurden in einem Rührkolben vorgelegt und auf 56°C gebracht. Dazu wurden 78,9 g Bis(4-isocyanotocyclohexyl) methane und 66,4 g Isophorondiisocyanatüber 5 Minuten zugetropft. Dann wurde mit 97 g Aceton verdünnt und 2 Stunden und 35 Minuten bei 74°C gerührt. Danach wurde 19,9 g 1,4 Butandiol zugetropft und weiter bei 74°C gerührt. Nach 2 Stunden und 40 Minuten wurde mit 417 g Aceton verdünnt und auf 50°C abgekühlt. Der NCO-Gehalt wurde zu 1,25 Gew.-% bestimmt
(berechnet: 1,18 Gew.-%).

Bei 50°C wird 30,3 g einer 50%igen wäßrigen Lösung des Natriumsalzes der 2-Aminoethyl-2-aminoethansulfonsäure innerhalb von 5 Minuten zugegeben und noch 5 Minuten weiter gerührt. Dann wird bei 50°C innerhalb von 15 Minuten mit 660,6 g Wasser verdünnt und dann mit 4,12 g Diethylentriaminund 2,02 g Isophorondiaminin 36,21 g Wasser kettenverlängert.
Nach Destillation des Acetons enthielt man eine feinteilige Dispersion mit ca. 44,5% Feststoffgehalt und 91,8 nm Partikelgröße bei einem pH-Wert von 8,03.

### Beispiel 4

162,38 g 2-Butyl-2-ethyl-1,3-propanediol, 52,55 g eines Butanol-gestarteten Polyethylenoxids der OH-Zahl 15, 146,51 g PolyTHF 2000 und 0,39 g zinnfreier Katalysator auf Basis Bismuth-Neodecanoat, 75%ig in Aceton (Borchikat 315, OMG Borchers) wurden in einem Rührkolben vorgelegt und auf 56°C gebracht. Dazu wurden 89,32 g Bis(4-isocyanoto-cyclohexyl) methane und 75,17 g Isophorondiisocyanatüber 5 Minuten zugetropft. Dann wurde mit 95,74 g Aceton verdünnt und 3 Stunden und 15 Minuten bei 76°C gerührt. Danach wurde 22,55 g 1,4 Butandiol zugetropft und weiter bei 77°C gerührt. Nach 1 Stunde wurde mit 415 g Aceton verdünnt und auf 50°C abgekühlt. Der NCO-Gehalt wurde zu 1,3 Gew.-% bestimmt (berechnet: 1,35 Gew.-%).
Bei 50°C wird 34,35 g einer 50%igen wäßrigen Lösung des Natriumsalzes der 2-Aminoethyl-2-aminoethansulfonsaure innerhalb von 5 Minuten zugegeben und noch 5 Minuten weiter gerührt. Dann wird bei 50°C innerhalb von 15 Minuten mit 658,36 g Wasser verdünnt und dann mit 4,67 g Diethylentriaminund 2,28 g Isophorondiaminin 41 g Wasser kettenverlängert.
Nach Destillation des Acetons enthielt man eine feinteilige Dispersion mit ca. 40,9% Feststoffgehalt und 85,8 nm Partikelgröße bei einem pH-Wert von 9,78.

### Beispiel 5

81,22 g 2-Butyl-2-ethyl-1,3-propanediol, 46 g eines Butanol-gestarteten Polyethylenoxids der OH-Zahl 15, 261,61 g eines Polyesterpolyols auf Basis Hexandisäure und 2,2-Dimethyl-1,3-propandiol und -1,6-hexandiol mit der OH-Zahl 56 und 0,27 g zinnfreier Katalysator auf Basis Bismuth-Neodecanoat, 75%ig in Aceton (Borchikat 315, OMG Borchers) wurden in einem Rührkolben vorgelegt und auf 57°C gebracht. Dazu wurden 78,18 g Bis(4-isocyanotocyclohexyl) methane und 65,8 g Isophorondiisocyanatüber 5 Minuten zugetropft. Dann wurde mit 97 g Aceton verdünnt und 3 Stunden und 30 Minuten bei 76°C gerührt. Danach wurde 19,74 g 1,4 Butandiol zugetropft und weiter bei 74°C gerührt. Nach 1 Stunde wurde mit 417,4 g Aceton verdünnt und auf 50°C abgekühlt. Der NCO-Gehalt wurde zu 1,15 Gew.-% bestimmt
(berechnet: 1,17 Gew.-%).

Bei 50°C wird 30,07 g einer 50%igen wäßrigen Lösung des Natriumsalzes der 2-Aminoethyl-2-aminoethansulfonsäure innerhalb von 5 Minuten zugegeben und noch 5 Minuten weiter gerührt. Dann wird bei 50°C innerhalb von 17 Minuten mit 660,76 g Wasser verdünnt und dann mit 4,09 g Diethylentriaminund 2 g Isophorondiaminin 35,89 g Wasser kettenverlängert.
Nach Destillation des Acetons enthielt man eine feinteilige Dispersion mit ca. 42,1% Feststoffgehalt und 102,8 nm Partikelgröße bei einem pH-Wert von 9,87.

### Anwendungstechnische Prüfungen

### a) Herstellung der Farbformulierungen

Aus den in Tabelle 1 angegeben Bestandteilen (Mengen in g) wurden in der von oben nach unten angegebenen Reihenfolge bei Raumtemperatur unter Rühren mit einem Scheibenrührer bei 400 - 2500 Umdrehungen pro Minute die Dachhautformulierungen basierend auf der wässrigen, beispielhaften Polymerisatdispersionen hergestellt.

**Tabelle 1**

| Dachhautformulierung | A | A1 | B | C | D | E |
|---|---|---|---|---|---|---|
| Dispersion Beispiel | 1 | Vergl. 1 | 2 | 3 | 4 | 5 |
| Menge Dispersion [g] | 62 | 62 | 58 | 63,5 | 63 | 65 |
| Lutensol TO82 | 0,4 | 0,4 | 0,4 | 0,4 | 0,4 | 0,4 |
| Agitan 282 | 0,5 | 0,5 | 0,5 | 0,5 | 0,5 | 0,5 |
| Dispex CX 4320 | 1,2 | 1,2 | 1,2 | 1,2 | 1,2 | 1,2 |
| Omyacarb 5GU | 29 | 29 | 36,5 | 34 | 34 | 31,5 |
| Wasser | 6 | 6 | 3 | 0 | 0 | 0 |
| Rheovis PU 1270 | 0,5 | 0,5 | 0,2 | 0,4 | 0,4 | 0,4 |
| Agitan 282 | 0,4 | 0,4 | 0,4 | 0,4 | 0,4 | 0,4 |

### Verwendete Rohstoffe

1) Lutensol TO 82, BASF SE, Ludwigshafen
2) Agitan 282, Münzing Chemie GmbH, Heilbronn
3) Dispex CX 4320, BASF SE, Ludwigshafen
4) Hydrocarb 95 ME, Omya, Oftringen, Schweiz
5) Omyacarb 5 GU, Omya, Oftringen, Schweiz
6) Omyacarb Extra CL, Omya, Oftringen, Schweiz
7) Rheovis PU 1270, BASF SE, Ludwigshafen

Nach Zugabe der letzten Komponente rührte man noch weiter bis alles homogen vermischt ist (ca. 10 min) und gibt anschließend die erhaltene Dachhautformulierung für 0,5 min bei 2000 U/min in einen Speed Mixer DAC 400 FVZ der Fa. Hauschild.

Die Dachhautformulierung besitzt einen Feststoffgehalt von ca. 63 - 67%, eine Pigmentvolumenkonzentration von ca. 29 und eine Viskosität von 8000 - 10000 mPas (Brookfield, Spindel 6, 20 U/min).

### b) Herstellung der Beschichtungen und Prüfkörper

Die vorgenannte Dachhautformulierung wurde mit einem Rakel in einer Schichtdicke von 1,2 mm auf ein teflonbeschichtes Substrat aufgetragen. Anschließend wurden die so erhaltenen Beschichtungen für 7 Tage im Klimaraum bei 50 % relativer Luftfeuchtigkeit und 23 °C getrocknet. Die resultierende Trockenschichtdicke beträgt ca. 0,60 mm. Nach Ablösen der Beschichtung vom Substrat wurden die benötigten Prüfkörper mit entsprechenden Stanzeisen ausgestanzt.

### c.) Prüfung der Zugfestigkeit, Reißfestigkeit und Reißdehnung

Aus der oben beschriebenen Beschichtungen wurden Schulterstäbe der Größe S1 mit Hilfe eines Stanzeisens ausgestanzt.
Die Prüfung erfolgte in Anlehnung an DIN 53504. Die Schulterstäbe werden in einer Zug-/Dehnungsprüfmaschine der Fa. Zwick eingespannt und anschließend mit einer Geschwindigkeit von 200 mm/min bis zum Reißen auseinander gezogen.

**Tabelle 2: Prüfung der Dachhautformulierung**

| Dachhautformulierung | | A | Vergl. 1 | B | C | D | E |
|---|---|---|---|---|---|---|---|
| Maximalkraft | N/mm² | 4,41 | 3,2 | 4,09 | 3,64 | 4,48 | 5,09 |
| Dehnung bei Maximalkraft | % | 775 | 40 | 855 | 603 | 424 | 638 |
| Bruchkraft | N/mm² | 4,37 | 3,15 | 4,08 | 3,63 | 4,47 | 5,09 |
| Bruchdehnung | % | 785 | 42 | 856 | 604 | 425 | 638 |

Alle Beschichtungsformulierungen A bis E weisen eine sehr hohe Bruchkraft von 3,6 bis 5,09 N/mm² auf bei gleichzeitig hoher Bruchdehnung von 425 bis 856 %. Dieses Verhalten ist eine Bestätigung für die gute Füllstoffverträglichkeit der Polyurethandispersionen gemäß der vorliegenden Erfindung, im Vergleich zum Stand der Technik (Vergleichsbeispiel 1).

Alle Dachhautformulierungen mit den füllstoffverträglichen Polyurethandispersionen zeigen eine sehr große Dehnbarkeit von mehr als 500% bei Bruchkräften von etwa 2N/mm².

## Patentansprüche

1. Beschichtungszusammensetzung für flexible Dachbeschichtungen enthaltend
- wenigstens eine wässrigen Polyurethandispersion, mit einem Gehalt von Polyalkylenoxid von mindestens 10 g/kg Polyurethan und einem Gehalt eines sulfonierten Rohstoffs von mindestens 25 mmol pro kg Polyurethan, als Bindemittel,
- wenigstens einen (an)organischen Füllstoff und/oder wenigstens ein (anorganisches Pigment,
- wenigstens ein übliches Hilfsmittel und
- Wasser,
**dadurch gekennzeichnet, dass** die Pigmentvolumenkonzentration 10 bis 40 beträgt.

2. Beschichtungszusammensetzung gemäß Anspruch 1, **dadurch gekennzeichnet, dass** die Polyurethandispersion langkettige Alkanol-gestartete Polyethylenoxide und Natriumsalze der 2-Aminoethyl-2-amino-ethansulfonsäure enthält.

3. Eine beschichtete Oberfläche, umfassend ein Baustoffsubstrat mit einer Hauptoberfläche, von der zumindest ein Teilbereich mit einer wässrigen Polyurethandispersion, mit einem Gehalt von Polyalkylenoxid von mindestens 10 g/kg Polyurethan und einem Gehalt eines sulfonierten Rohstoffs von mindestens 25 mmol pro kg Polyurethan als Bindemittel in einem gefüllten Beschichtungsmittel, als abschließende Dachbeschichtungszusammmensetzung, bedeckt ist, **dadurch gekennzeichnet**, dassadie Pigmentvolumenkonzentration 10 bis 40 beträgt.

4. Eine beschichtete Oberfläche gemäß Anspruch 3, **dadurch gekennzeichnet, dass** die Polyurethandispersion langkettige Alkanol-gestartete Polyethylenoxide und Natriumsalze der 2-Aminoethyl-2-amino-ethansulfonsäure enthält.

## Claims

1. A coating composition for flexible roof coatings comprising
- at least one aqueous polyurethane dispersion, having a polyalkylene oxide content of at least 10 g/kg of polyurethane and a sulfonated raw material content of at least 25 mmol per kg of polyurethane, as binder,
- at least one (in)organic filler and/or at least one (in)organic pigment,
- at least one customary auxiliary and
- water,
wherein the pigment concentration by volume is 10 to 40.

2. The coating composition according to claim 1, wherein the polyurethane dispersion comprises long-chain alkanol-initiated polyethylene oxides and sodium salts of 2-aminoethyl-2-aminoethanesulfonic acid.

3. A coated surface comprising a building material substrate comprising a main surface of which at least a portion is covered with an aqueous polyurethane dispersion having a polyalkylene oxide content of at least 10 g/kg of polyurethane and a sulfonated raw material content of at least 25 mmol per kg of polyurethane, as binder in a filled coating composition, as an outer flexible roof coating composition, wherein the pigment concentration by volume is 10 to 40.

4. A coated surface according to claim 3, wherein the polyurethane dispersion comprises long-chain alkanol-initiated polyethylene oxides and sodium salts of 2-aminoethyl-2-aminoethanesulfonic acid.

## Revendications

1. Composition de revêtement pour des revêtements de toit flexibles contenant
- au moins une dispersion aqueuse de polyuréthane, dotée d'une teneur en poly(oxyde d'alkylène) d'au moins 10 g/kg de polyuréthane et d'une teneur en une matière première sulfonée d'au moins 25 millimoles par kg de polyuréthane, en tant que liant,
- au moins une charge (in)organique et/ou au moins un pigment (in)organique,
- au moins un auxiliaire habituel et
- de l'eau,
**caractérisée en ce que** la concentration volumique de pigment est de 10 à 40.

2. Composition de revêtement selon la revendication 1, **caractérisée en ce que** la dispersion de polyuréthane contient des poly(oxyde d'éthylène) amorcés par un alcanol à chaîne longue et des sels de sodium de l'acide 2-aminoéthyl-2-amino-éthanesulfonique.

3. Surface revêtue, comprenant un substrat de matériau de construction doté d'une surface principale, au moins une zone partielle de laquelle étant recouverte par une dispersion aqueuse de polyuréthane, dotée d'une teneur en poly(oxyde d'alkylène) d'au moins 10 g/kg de polyuréthane et d'une teneur en une matière première sulfonée d'au moins 25 millimoles par kg de polyuréthane en tant que liant dans un agent de revêtement chargé, en tant que composition de revêtement de toit finale, **caractérisée en ce que** la concentration volumique de pigment est de 10 à 40.

4. Surface revêtue selon la revendication 3, **caractérisée en ce que** la dispersion de polyuréthane contient des poly(oxyde d'éthylène) amorcés par un alcanol à chaîne longue et des sels de sodium de l'acide 2-aminoéthyl-2-amino-éthanesulfonique.
